# EUROPÄISCHE PATENTSCHRIFT

(11) **EP 3 113 972 B1**
(45) Veröffentlichungstag und Bekanntmachung des Hinweises auf die Patenterteilung: **28.02.2018**
(21) Anmeldenummer: 15717870.8
(22) Anmeldetag: 17.04.2015
(51) Int. Cl.: B60L 15/32, B60L 9/24, B60L 3/00, B61C 3/00, B61C 9/38

(54) **SCHIENENFAHRZEUG MIT ZUMINDEST ZWEI STROMABNEHMERN**
RAIL VEHICLE COMPRISING AT LEAST TWO CURRENT COLLECTORS
VÉHICULE FERROVIAIRE COMPRENANT AU MOINS DEUX COLLECTEURS DE COURANT

(30) Priorität: 30.04.2014 DE 102014208245
(43) Veröffentlichungstag der Anmeldung: 11.01.2017
(73) Patentinhaber: Siemens Aktiengesellschaft, 80333 München (DE)
(72) Erfinder: FETTER, Wolfgang, 91052 Erlangen (DE)
(86) Internationale Anmeldenummer: PCT/EP2015/058408
(87) Internationale Veröffentlichungsnummer: WO 2015/165756

(56) Entgegenhaltungen:
- EP-A1- 0 597 409
- EP-A1- 2 189 320
- WO-A2-2013/160135
- JP-A- 2012 085 535

## Beschreibung

Die Erfindung betrifft ein Schienenfahrzeug mit einem ersten Stromabnehmer, der über einen ersten Hauptschalter eine erste Transformatoreinheit versorgen kann, zumindest einem zweiten, vom ersten Stromabnehmer unterschiedlichen Stromabnehmer, der über einen zweiten, vom ersten Hauptschalter unterschiedlichen Hauptschalter eine zweite, von der ersten Transformatoreinheit unterschiedliche Transformatoreinheit versorgen kann, und einer elektrischen Verbindungseinheit, durch welche in einem ersten Betriebsmodus ein Energiefluss zwischen dem ersten Stromabnehmer und der zweiten Transformatoreinheit herstellbar ist und in einem zweiten Betriebsmodus ein Energiefluss zwischen dem zweiten Stromabnehmer und der ersten Transformatoreinheit herstellbar ist.

Schienenfahrzeuge, insbesondere Triebzüge können mit mehreren Stromabnehmern ausgestattet sein. Es sind Ausführungen bekannt, bei welchen jedem Stromabnehmer jeweils eine Transformatoreinheit zugeordnet ist. Gemäß einer besonderen Betriebsbedingung darf nur ein Stromabnehmer mit der netzseitigen Versorgung verbunden werden, sodass eine über den aktiven Stromabnehmer von der netzseitigen Versorgung bezogene Energie über eine elektrische Verbindung an alle aktiven Transformatoreinheiten zu verteilen ist.

Dokument WO2013160135A2 offenbart ein elektrisches Schienenfahrzeug mit einem ersten und einem zweiten Stromabnehmer, die an eine gemeinsame Stromversorgungsleitung des Schienenfahrzeugs angeschlossen sind. Im Zuge der gemeinsamen Stromversorgungsleitung ist an einem ersten Ende des mittleren Abschnitts ein erster Abschnitts-Hauptschalter in Reihe mit einem ersten Endabschnitt-Hauptschalter, und an einem zweiten Ende des mittleren Abschnitts ein zweiter Abschnitts-Hauptschalter in Reihe mit einem zweiten Endabschnitt-Hauptschalter angeordnet. Der erste Stromabnehmer ist mit dem Verbindungspunkt von erstem Abschnitts-Hauptschalter und erstem Endabschnitt-Hauptschalter, und der zweite Stromabnehmer mit dem Verbindungspunkt von zweitem Abschnitts-Hauptschalter und zweitem Endabschnitt-Hauptschalter verbunden.

Dokument EP2189320A1 offenbart ein Schienenfahrzeug mit ersten und zweiten Stromabnehmern und zugehörigen Hauptschaltern, wobei eine Verbindungsleitung und Schalter den Energiefluss zwischen ersten Lasten und dem ersten Stromabnehmer, und zwischen zweiten Lasten und dem zweiten Stromabnehmer ermöglichen.

Der Erfindung liegt die Aufgabe zugrunde, ein gattungsgemäßes Schienenfahrzeug bereitzustellen, bei welchem eine hohe Flexibilität im Betrieb der Transformatoreinheiten erreicht werden kann.

Erfindungsgemäß weist die elektrische Verbindungseinheit eine Verbindungsleitung sowie eine Schalteinheit auf, wobei die Schalteinheit zwei über die elektrische Verbindungsleitung verbundene Schaltvorrichtungen aufweist, die jeweils einem unterschiedlichen Hauptschalter zugeordnet sind, wobei jede Schaltvorrichtung dazu ausgebildet ist, wahlweise einen elektrischen Kontakt der Verbindungsleitung mit der dem zugeordneten Stromabnehmer zugewandten Seite oder mit der dem zugeordneten Stromabnehmer abgewandten Seite des zugeordneten Hauptschalters herzustellen. Ferner weist die elektrische Verbindungseinheit erfindungsgemäß eine Schalteinheit auf, die dazu ausgebildet ist, in beiden Betriebsmodi die Hauptschalter in Richtung des Energieflusses in Reihe zu schalten.

Hierdurch kann eine vorteilhafte Flexibilität bezüglich einer Betätigung der Hauptschalter und daher eines Betriebs der Transformatoreinheiten konstruktiv einfach und kostengünstig erreicht werden. Insbesondere kann der Einsatz eines zusätzlichen Hauptschalters vermieden werden. Dabei ist eine Ausbildung der Schalteinheit bzw. der SChaltvorrichtungen, die frei von Hauptschaltern sind, möglich. Die Schaltvorrichtungen sind vorteilhafterweise jeweils frei von Hauptschaltern. Sie weisen jeweils zumindest einen Schalter auf, der vorteilhafterweise als Trennschalter ausgebildet ist. Weisen die Schaltvorrichtungen jeweils mehrere Schalter auf, sind diese vorteilhafterweise jeweils als Trennschalter ausgebildet. Durch die erzielbare Flexibilität bezüglich der Betätigung der Hauptschalter können den Betrieb von Transformatoren betreffende Vorschriften konstruktiv einfach erfüllt werden.

Der Begriff "Hauptschalter" in Bezug auf eine elektrische Anlage eines Schienenfahrzeugs bezeichnet insbesondere einen Netzschalter, der eine elektrische Verbindung der elektrischen Anlage mit einer netzseitigen Spannungsversorgung unterbrechen bzw. herstellen kann. Er ist zweckmäßigerweise als Lastschalter ausgebildet, der in der Lage ist, die elektrische Verbindung unter einer Volllast der elektrischen Anlage zu trennen. Der Hauptschalter führt im geschlossenen Zustand eine von der netzseitigen Spannungsversorgung bereitgestellte Hochspannung und bildet daher eine Komponente der sogenannten Hochspannungsausrüstung des Schienenfahrzeugs.

Unter einer "Transformatoreinheit" soll eine Einheit der elektrischen Anlage verstanden werden, die dazu vorgesehen ist, aus einer aus der netzseitigen Versorgung mittels eines Stromabnehmers abgegriffenen elektrischen Spannung eine von dieser Spannung unterschiedliche, für den Betrieb zumindest einer nachgeschalteten Traktionseinheit zum Antreiben von zumindest einem Radsatz des Schienenfahrzeugs angepasste Spannung bereitzustellen. Hierzu weist eine derartige Traktionseinheit zumindest einen Elektromotor, welcher mit dem zumindest einen Radsatz mechanisch koppelbar ist, und wenigstens eine Leistungsversorgungseinheit, z.B. eine Stromrichtereinheit, auf, die zur Erzeugung einer elektrischen Leistung für den Elektromotor vorgesehen ist.

Die Stromabnehmer können vorteilhaft jeweils einem Betrieb unter einer unterschiedlichen, von einer netzseitigen Spannungsversorgung bereitgestellten Spannung zugeordnet sein. Typische Werte sind hierbei 15 kV AC und 25 kV AC. Hierbei kann der simultane Einsatz beider Stromabnehmer vorschriftsmäßig untersagt sein. In diesem Text werden die Begriffe "aktiver Zustand" und "inaktiver Zustand" für einen Stromabnehmer genutzt, der in Kontakt mit der netzseitigen Spannungsversorgung bzw. von dieser getrennt ist.

Ein zwischen dem ersten Stromabnehmer und der zweiten Transformatoreinheit hergestellter Energiefluss kann in einem Betrieb der zweiten Transformatoreinheit, insbesondere einem Traktionsbetrieb einer nachgeschalteten Traktionseinheit, vom ersten Stromabnehmer zur zweiten Transformatoreinheit erfolgen. Ein Energiefluss mit umgekehrter Richtung, also von der zweiten Transformatoreinheit zum ersten Stromabnehmer kann in einem regenerativen Bremsmodus einer der zweiten Transformatoreinheit nachgeschalteten Traktionseinheit hergestellt sein.

In einer bevorzugten Ausbildung der Erfindung wird vorgeschlagen, dass das Schienenfahrzeug eine Steuereinheit zur Steuerung der Hauptschalter aufweist, die in zumindest einem Betriebsmodus dazu vorgesehen ist, die Hauptschalter zeitversetzt voneinander zu schließen. Hierdurch kann ein in Bezug auf Stromstöße schonender Betrieb des Schienenfahrzeugs vorteilhaft erreicht werden. Insbesondere können durch ein zeitversetztes Schließen der Hauptschalter hohe, durch die Transformatoreinheiten hervorgerufene Einschaltstromstöße einfach vermieden werden.

Außerdem kann die Erfindung bei gängigen Triebzugskompositionen eingesetzt werden, wenn die Transformatoreinheiten unterschiedlichen Wagen zugeordnet sind.

Insbesondere sind die Hauptschalter und die jeweils zugeordnete Transformatoreinheit jeweils dem gleichen Wagen zugeordnet. Besonders vorteilhaft kann eine flexible Zuschaltung einer Transformatoreinheit eines Wagens durch den Hauptschalter erfolgen, der dem gleichen Wagen zugeordnet ist.

Eine Versorgung der zweiten Transformatoreinheit kann über eine große Strecke entlang des Schienenfahrzeugs erfolgen, wenn die Verbindungsleitung der Verbindungseinheit die jeweils eine der Transformatoreinheiten aufweisenden Wagen verbindet.

Insbesondere kann die elektrische Verbindungsleitung als Dachleitung ausgebildet sein, wodurch eine einfache Isolierung, insbesondere eine Luftisolierung, der Verbindungsleitung erreicht werden kann.

Ferner wird vorgeschlagen, dass die Schalteinheit eine Kopplungseinheit aufweist, die dazu vorgesehen ist, einen Betätigungsvorgang des zweiten Stromabnehmers mit einem Betätigungsvorgang der Schalteinheit zu koppeln. Hierdurch kann vorteilhaft ein hinsichtlich des Zustands des zweiten Stromabnehmers geeigneter Betätigungsschritt der Schalteinheit erfolgen. Insbesondere kann das Risiko einer Fehlbetätigung der Schalteinheit vermindert werden. Des Weiteren kann vorteilhafterweise ein für die Schalteinheit separater Antrieb eingespart werden, wenn die Kopplungseinheit ein zu betätigendes Glied der Schalteinheit mit einem Antrieb des zweiten Stromabnehmers mechanisch koppelt.

In diesem Zusammenhang wird vorgeschlagen, dass die Kopplungseinheit den zweiten Stromabnehmer mit der Schaltvorrichtung derart verbindet, dass ein Bringen des zweiten Stromabnehmers in den inaktiven Zustand einen elektrischen Kontakt der Verbindungsleitung mit der dem zweiten Stromabnehmer zugewandten Seite des zweiten Hauptschalters bewirkt. Hierdurch kann ein separater, von der Betätigung des zweiten Stromabnehmers losgelöster Betätigungsschritt der Schaltvorrichtung eingespart werden.

Gemäß eine vorteilhaften Weiterbildung der Erfindung wird vorgeschlagen, dass die Schalteinheit einen Schalter aufweist, welcher dazu vorgesehen ist, vorzugsweise in einem Betätigungsschritt im ersten Betriebsmodus den zweiten Hauptschalter in Reihe mit dem ersten Hauptschalter zu schalten und eine elektrische Verbindung des zweiten Hauptschalters mit dem zweiten Stromabnehmer zu unterbrechen. Dadurch kann vorteilhaft ein Freischalten eines sich im inaktiven Zustand befindenden Stromabnehmers erreicht werden. Zweckmäßigerweise kann der Schalter als Umschalttrenner ausgebildet sein.

Es kann ferner ein Verfahren zur Inbetriebnahme einer Traktionsanlage des vorgeschlagenen Schienenfahrzeugs ausgeführt werden, bei welchem vor Herstellung des Energieflusses die Hauptschalter in Richtung des Energieflusses in Reihe geschaltet werden. Besonders vorteilhaft können die Hauptschalter nacheinander geschlossen werden.

Das Schienenfahrzeug kann als Triebzug ausgebildet sein, der einen Verband von Wagen zum Transport von Passagieren aufweist. In einer alternativen Ausbildung kann das Schienenfahrzeug als Triebfahrzeug ausgeführt sein, das zur Kopplung mit einer antriebslosen Reisezug- oder Güterwagenkomposition gekoppelt werden kann und aus mehreren, miteinander gekuppelten Triebeinheiten besteht, wie z.B. als Doppellokomotive.

Es werden Ausführungsbeispiele der Erfindung anhand der Zeichnungen erläutert. Es zeigen:
- Figur 1:: ein Schienenfahrzeug mit zwei Stromabnehmern und zwei Transformatoreinheiten in einer schematischen Seitenansicht,
- Figur 2:: eine schematische Übersicht der Transformatoreinheiten und der diesen zugeordneten Komponenten,
- Figur 3:: den Verlauf eines Energieflusses zwischen einem Stromabnehmer und einer einem entfernten Wagen zugeordneten Transformatoreinheit und
- Figur 4:: die Übersicht der Figur 2 in einer alternativen Ausführung.

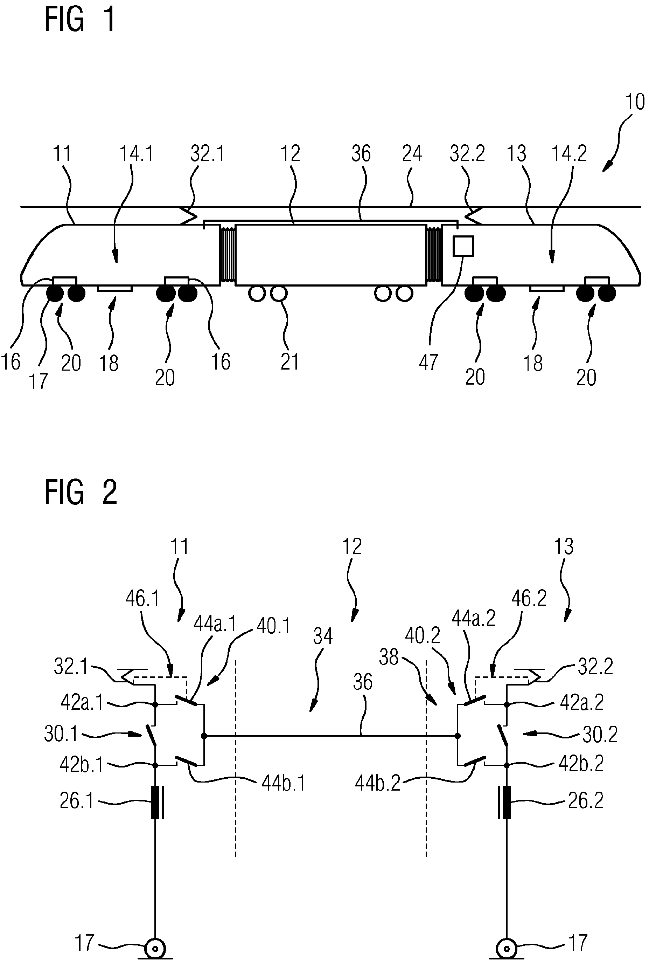

Figur 1 zeigt ein elektrisch angetriebenes Schienenfahrzeug 10 in einer schematischen Seitenansicht. Das Schienenfahrzeug 10 ist als ein Verband von mehreren Wagen 11, 12 und 13 ausgebildet, die miteinander mechanisch gekoppelt sind. Es weist zwei Traktionseinheiten 14.1 und 14.2 auf. Diese umfassen jeweils Elektromotoren 16, die Antriebsachsen 17 von jeweils einem Triebdrehgestell 20 antreiben. Die Darstellung in Figur 1 ist äußerst schematisch, wobei die im zugeordneten Triebdrehgestell 20 angeordneten Elektromotoren 16 der Übersichtlichkeit halber oberhalb dieses gezeichnet sind. Die Elektromotoren 16 werden mittels einer der jeweiligen Traktionseinheit 14 zugehörigen Leistungsversorgungseinheit 18 mit elektrischer Leistung versorgt. Diese kann insbesondere als Stromrichtereinheit ausgebildet sein.

Figur 2 zeigt eine starke schematisierte Darstellung der Traktionsanlage des Schienenfahrzeugs 10. Die Zuordnung der gezeigten Komponenten zu den unterschiedlichen Wagen 11, 12, 13 ist mittels gestrichelter Linien bezeichnet.

Im betrachteten Ausführungsbeispiel ist das Schienenfahrzeug 10 für einen Betrieb unter einer Wechselspannung geeignet, wobei eine erste Transformatoreinheit 26.1 und eine zweite Transformatoreinheit 26.2 zum Heruntertransformieren einer von der Versorgung 24 bezogenen Hochspannung, typischerweise 15 kV oder 25 kV, vorgesehen sind. Die Traktionseinheiten 14.1, 14.2 sind bezüglich eines Energieflusses in einem Traktionsmodus des Schienenfahrzeugs 10 den Transformatoreinheiten 26.1, 26.2 nachgeschaltet, wobei eine feste Zuordnung einer Traktionseinheit 14 zu einer bestimmten Transformatoreinheit 26 möglich aber nicht zwangsweise erforderlich ist. Eine elektrische Versorgung der Traktionseinheiten 14.1, 14.2 kann mittels Hauptschaltern 30.1, 30.2 hergestellt oder unterbrochen werden. Ein erster Hauptschalter 30.1 ist der Transformatoreinheit 26.1 zugeordnet und - bezüglich eines Energieflusses in einem Traktionsbetrieb des Schienenfahrzeugs 10 - dieser zugeordneten Transformatoreinheit 26.1 vorgeschaltet. Ein zweiter Hauptschalter 30.2 ist der Transformatoreinheit 26.2 zugeordnet und - bezüglich eines Energieflusses in einem Traktionsbetrieb des Schienenfahrzeugs 10 - dieser zugeordneten Transformatoreinheit 26.2 vorgeschaltet.

Das Schienenfahrzeug 10 weist einen ersten Stromabnehmer 32.1, der dem Hauptschalter 30.1 zugeordnet ist, und zumindest einen zweiten Stromabnehmer 32.2 auf, welcher dem Hauptschalter 30.2 zugeordnet ist. In der betrachteten Ausführung ist die netzseitige Versorgung 24 als Oberleitung ausgeführt, sodass die Stromabnehmer 32 jeweils als Pantograph ausgebildet und auf dem Dach des Schienenfahrzeugs 10 angeordnet sind. Gemäß einer alternativen Ausführung kann zumindest einer der Stromabnehmer 32 zum Abgreifen einer von einer Stromschiene bereitgestellten Spannung vorgesehen sein.

Der dem ersten Stromabnehmer 32.1 zugeordnete Hauptschalter 30.1 ist - bezüglich eines aus dem Stromabnehmer 32.1 fließenden Energieflusses - diesem Stromabnehmer 32.1 nachgeschaltet. Der erste Stromabnehmer 32.1 kann demnach die Transformatoreinheit 26.1 über den Hauptschalter 30.1 mit elektrischer Energie versorgen. Der Hauptschalter 30.1 sowie die zugeordnete Transformatoreinheit 26.1 werden unten als "erster" Hauptschalter 30.1 bzw. "erste" Transformatoreinheit 26.1 genannt. Der Hauptschalter 30.2 sowie die zugeordnete Transformatoreinheit 26.2 werden unten als "zweiter" Hauptschalter 30.2 bzw. "zweite" Transformatoreinheit 26.2 genannt.

In der betrachteten Ausführung sind die Endwagen 11 und 13 jeweils mit zumindest einem Triebdrehgestell 20 ausgestattet. Ein dazwischen angeordneter Mittelwagen 12 ist antriebslos, d.h. ausschließlich mit Laufachsen 21 versehen.

Die Transformatoreinheiten 26.1, 26.2 sind jeweils einem unterschiedlichen Wagen 11 bzw. 13 zugeordnet, insbesondere in diesem Wagen 11 bzw. 13 angeordnet. Die Hauptschalter 30.1, 30.2 sind ebenfalls einem unterschiedlichen Wagen 11 bzw. 13 zugeordnet. Dabei sind sie dem gleichen Wagen wie die zugeordnete Transformatoreinheit 26.1 bzw. 26.2 zugeordnet. Die Hauptschalter 30.1, 30.2 und die jeweils zugeordnete Transformatoreinheit 26.1 bzw. 26.2 sind demnach jeweils dem gleichen Wagen 11 bzw. 13 zugeordnet. Insbesondere sind die Hauptschalter 30.1, 30.2 und die jeweils zugeordnete Transformatoreinheit 26.1 bzw. 26.2 im gleichen Wagen 11 bzw. 13 angeordnet.

Die Endwagen sowie der Mittelwagen sind zum Transport von Passagieren vorgesehen. Das Schienenfahrzeug 10 ist für einen autarken Betrieb geeignet und kann mit gattungsgemäßen Schienenfahrzeugen 10 gekoppelt werden. In der fachmännischen Sprache ist das Schienenfahrzeug 10 auch "Triebzug" genannt.

Gemäß besonderen Betriebsbedingungen darf das Schienenfahrzeug 10 mit nur einem aktiven, d.h. mit der Versorgung 24 verbundenen Stromabnehmer 32 betrieben werden. Dies ist insbesondere gegeben, wenn die Stromabnehmer 32 jeweils einer unterschiedlichen Betriebsspannung der Versorgung 24 zugeordnet sind. Ist z.B. der erste Stromabnehmer 32.1 im aktiven Zustand, muss ein Energiefluss zwischen dem ersten Stromabnehmer 32.1 und der zweiten Transformatoreinheit 26.2 herstellbar sein. Dies erfolgt mittels einer elektrischen Verbindungseinheit 34, welche eine elektrische Verbindungsleitung 36 aufweist. Diese elektrische Verbindungsleitung 36 verbindet die Wagen 11 und 13 miteinander, in welchen jeweils eine der Transformatoreinheiten 26 angeordnet ist. In der betrachteten Ausführung ist die elektrische Leitung 36 als Dachleitung ausgebildet (siehe Figur 1).

Zusätzlich zur elektrischen Leitung 36 weist die elektrische Verbindungseinheit 34 eine Schalteinheit 38 auf. Eine Kernfunktion der Schalteinheit 38 besteht darin, eine elektrische Verbindung zur Herstellung eines Energieflusses zwischen dem ersten Stromabnehmer 32.1 und der zweiten Transformatoreinheit 26.2 derart auszubilden, dass der Energiefluss über den ersten, dem ersten Stromabnehmer 32.1 zugeordneten Hauptschalter 30.1 und den zweiten, dem zweiten Stromabnehmer 32.2 zugeordneten Hauptschalter 30.2 hergestellt wird. Hierzu ist die Schalteinheit 38 dazu ausgebildet, den ersten Hauptschalter 30.1 und den zweiten Hauptschalter 30.2 - bezüglich der Richtung des Energieflusses zwischen dem ersten Stromabnehmer 32.1 und der zweiten Transformatoreinheit 26.2 - in Reihe zu schalten.

Die Schalteinheit 38 weist eine erste Schaltvorrichtung 40.1 auf, die dem ersten Hauptschalter 30.1 zugeordnet ist. Die Schaltvorrichtung 40.1 kann wahlweise die elektrische Verbindungsleitung 36 mit einem Punkt 42a.1, der auf der Seite der Hauptschalters 30.1, die dem zugeordneten ersten Stromabnehmer 32.1 zugewandt ist, angeordnet ist, oder mit einem Punkt 42b.1 verbinden, der auf der anderen Seite des Hauptschalters 30.1 angeordnet ist. Der Punkt 42a.1 befindet sich zwischen dem zugeordneten, ersten Stromabnehmer 32.1 und dem Eingang des Hauptschalters 30.1. Bezüglich eines Energieflusses, der vom ersten Stromabnehmer 32.1 zur ersten Transformatoreinheit 26.1 verläuft, ist der Punkt 42a.1 dem Hauptschalter 30.1 vorgeschaltet, während der Punkt 42b.1 dem Hauptschalter 30.1 nachgeschaltet ist. Dieser Punkt 42b.1 befindet sich zwischen dem Ausgang der Hauptschalters 30.1 und der ersten Transformatoreinheit 26.1. Die Schaltvorrichtung 40.1 weist zwei parallel zueinander geschaltete, als Trennschalter ausgebildete Schalter 44a.1 und 44b.1 auf. Diese können eine elektrische Verbindung der Verbindungsleitung 36 mit dem Punkt 42a.1 bzw. mit dem Punkt 42b.1 herstellen oder trennen.

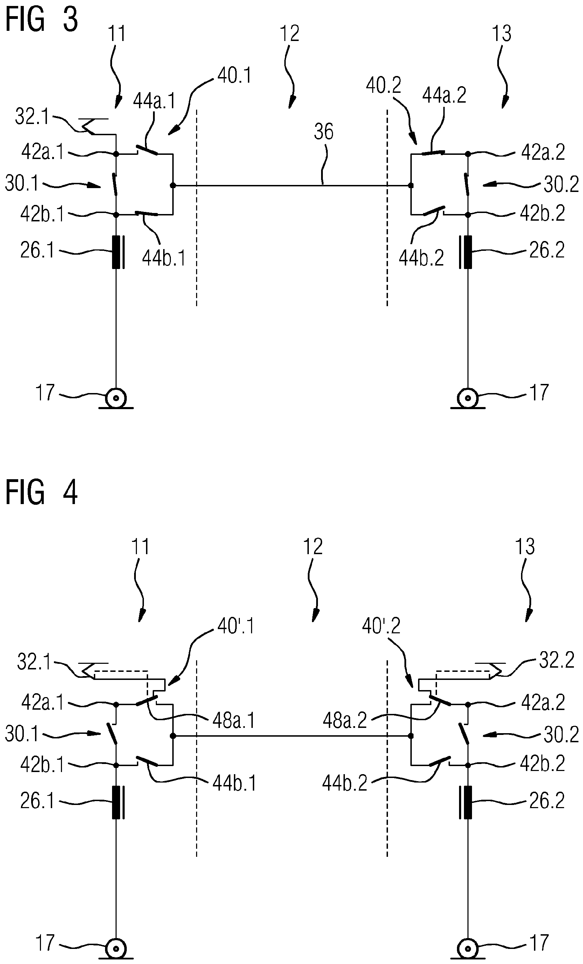

Figur 3 zeigt eine beispielhafte Versorgung der Transformatoreinheiten 26.1 und 26.2 über den sich im aktiven Zustand befindenden ersten Stromabnehmer 32.1. In dieser Konfiguration ist ein elektrischer Kontakt des Punkts 42b.1 mit der Verbindungsleitung 36 mittels der Schaltvorrichtung 40.1, und zwar mittels deren Schalter 44b.1 hergestellt. Dies bewirkt eine Abzweigung zur Speisung der Verbindungsleitung 36, welche - in Richtung eines zur Transformatoreinheit 26.2 hin fließenden Energieflusses betrachtet - nach dem Hauptschalter 30.1 erfolgt.

Die Schalteinheit 38 weist eine zweite Schaltvorrichtung 40.2 auf, die dem zweiten Hauptschalter 30.2 zugeordnet ist. Zum Aufbau und zu den Funktionalitäten der Schaltvorrichtung 40.2 wird - um unnötige Wiederholungen zu vermeiden - auf die obige Beschreibung bezüglich der ersten Schaltvorrichtung 40.1 verwiesen.

Im in Figur 3 dargestellten Beispiel einer Versorgung der Transformatoreinheiten 26.1 und 26.2 über den ersten Stromabnehmer 32.1 ist ein elektrischer Kontakt des Punkts 42a.2 mit der Verbindungsleitung 36 mittels der Schaltvorrichtung 40.2, und zwar mittels deren Schalter 44a.2 hergestellt. Dies bewirkt eine Einspeisung der Energie aus der Verbindungsleitung 36, die - in Richtung des Energieflusses betrachtet - vor dem Hauptschalter 30.2 erfolgt. Der in der Figur mittels einer fetten Linie dargestellte Energiefluss zwischen dem ersten Stromabnehmer 32.1 und der zweiten Transformatoreinheit 26.2 in einem Traktionsbetrieb derselben durchläuft daher zunächst den ersten Hauptschalter 30.1 und dann den zweiten Hauptschalter 30.2.

Die Schaltvorrichtungen 40.1 und 40.2 sind derart ausgebildet, dass ein Energiefluss zwischen dem zweiten, sich im aktiven Zustand befindenden Stromabnehmer 32.2 und der ersten Transformatoreinheit 26.1 herstellbar ist. Dabei können der zweite Hauptschalter 30.2 und der erste Hauptschalter 30.1 in Reihe geschaltet werden. Eine dazu geeignete Schalterkonfiguration der Schaltvorrichtungen 40.1 und 40.2 bewirkt einerseits eine Abzweigung zur Speisung der Verbindungsleitung 36, welche - in Richtung eines zur ersten Transformatoreinheit 26.1 hin fließenden Energieflusses betrachtet - nach dem zweiten Hauptschalter 30.2 erfolgt, und andererseits eine Einspeisung der Energie aus der Verbindungsleitung 36, die - in Richtung des Energieflusses betrachtet - vor dem ersten Hauptschalter 30.1 erfolgt. Dies wird durch eine Stellung der Schalter 42b.2 und 44a.1 jeweils in geschlossener Position erreicht. Der Energiefluss vom zweiten Stromabnehmer 32.2 zur ersten Transformatoreinheit 26.1 durchläuft daher zunächst den zweiten Hauptschalter 30.2 und dann den ersten Hauptschalter 30.1.

Die Schalteinheit 38 umfasst außerdem eine Kopplungseinheit 46.2, die dazu vorgesehen ist, einen Betätigungsvorgang des zweiten Stromabnehmers 32.2 mit einem Betätigungsvorgang der Schalteinheit 38, und zwar insbesondere der Schaltvorrichtung 40.2 zu koppeln. Eine Betätigung des zweiten Stromabnehmers 32.2 in den inaktiven Zustand bewirkt mittels der Kopplungseinheit 46.2 ein Schließen des Schalters 44a.2 und ein Öffnen bzw. eine Aufrechterhaltung des geöffneten Zustands des Schalters 44b.2, sodass ein elektrischer Kontakt der Verbindungsleitung 36 mit dem Punkt 42a.2 vor dem zweiten Hauptschalter 30.2 hergestellt wird. Das Bringen des zweiten Stromabnehmers 32.2 in den inaktiven Zustand bewirkt demnach einen elektrischen Kontakt der Verbindungsleitung 36 mit der dem zweiten Stromabnehmer 32.2 zugewandten Seite des zweiten Hauptschalters 30.2, wie in Figur 3 dargestellt.

Ferner umfasst die Schalteinheit 38 eine Kopplungseinheit 46.1, die dazu vorgesehen ist, einen Betätigungsvorgang des ersten Stromabnehmers 32.1 mit einem Betätigungsvorgang der Schaltvorrichtung 40.1 zu koppeln. Die obige Beschreibung zur Kopplungseinheit 46.2 findet entsprechende Anwendung.

Zur Inbetriebnahme der Traktionsanlage des Schienenfahrzeugs 10 erfolgen folgende Schritte. Falls sich der zweite Stromabnehmer 32.2 nicht im inaktiven Zustand befindet, wird er in diesen Zustand gebracht. Durch die Kopplungseinheit 46.2 erfolgt ein Schließen des Schalters 44a.2 und ein Öffnen bzw. ein Aufrechterhaltung der offenen Stellung des Schalters 44b.2. Der erste Stromabnehmer 32.1 wird in dessen aktiven Zustand gebracht, wodurch - über die Kopplungseinheit 46.1 - der Schalter 44b.1 geschlossen wird und ein Öffnen bzw. ein Aufrechterhalten der offenen Stellung des Schalters 44a.1 erfolgt. Hiermit sind die Hauptschalter 30.1 und 30.2 hinsichtlich des zwischen dem ersten Stromabnehmer 30.1 und der zweiten Transformatoreinheit 26.2 herstellbaren Energieflusses in Reihe geschaltet. Eine Steuereinheit 47 (siehe Figur 1) betätigt die Hauptschalter 30 zeitversetzt, sodass zunächst der erste Hauptschalter 30.1 geschlossen wird. Hierdurch wird die erste Transformatoreinheit 26.1 in Betrieb genommen. Danach wird von der Steuereinheit 47 der zweite Hauptschalter 30.2 geschlossen, wodurch die zweite Transformatoreinheit 26.2 in Betrieb genommen wird.

Figur 4 zeigt die Anordnung aus Figur 2 gemäß einer Ausführungsvariante. Die folgende Beschreibung beschränkt sich auf die Unterschiede dieser Ausführung zur Ausbildung gemäß Figur 2.

Die Unterschiede betreffen den Ausbau der Schaltvorrichtungen, die zur Unterscheidung mit den Bezugszeichen 40'.1 bezeichnet werden. Die Schaltvorrichtung 40'.2 weist einen Schalter auf, der dem Schalter 44b.2 entspricht. Parallel zum Schalter 44b.2 ist ein Schalter 48a.2 vorgesehen, der zumindest die gleiche Funktion wie der entsprechende Schalter 44a.2 hat. Dieser Schalter 48a.2 ist als Umschalttrenner ausgebildet und dient zusätzlich dazu, in Verbindung mit der Herstellung eines Energieflusses zwischen dem ersten Stromabnehmer 32.1 und der zweiten Transformatoreinheit 26.2 die elektrische Verbindung des zweiten Hauptschalters 30.2 mit dem ihm zugeordneten zweiten Stromabnehmer 32.2 zu unterbrechen. Der Schalter 48a.2 dient dazu, wie oben beschrieben einen elektrischen Kontakt der Verbindungsleitung 36 mit dem Punkt 42a.2 herzustellen, wodurch die Hauptschalter in Reihe geschaltet werden, und zusätzlich dabei diesen Punkt 42a.2 vom zweiten Stromabnehmer 32.2 elektrisch zu trennen.

Die erste Schaltvorrichtung 40'.1 weist einen identischen Aufbau mit einem als Umschalttrenner ausgebildeten Schalter 48a.1 auf, der in Verbindung mit der Herstellung eines Energieflusses zwischen dem zweiten Stromabnehmer 32.2 und der ersten Transformatoreinheit 26.1 die elektrische Verbindung des ersten Hauptschalters 30.1 mit dem ersten Stromabnehmer 32.1 unterbrechen kann. Der Schalter 48a.1 dient dazu, wie oben beschrieben einen elektrischen Kontakt der Verbindungsleitung 36 mit dem Punkt 42a.1 herzustellen, wodurch die Hauptschalter in Reihe geschaltet werden, und zusätzlich dabei diesen Punkt 42a.1 vom ersten Stromabnehmer 32.1 elektrisch zu trennen.

## Patentansprüche

1. Schienenfahrzeug mit einem ersten Stromabnehmer (32.1), der über einen ersten Hauptschalter (30.1) eine erste Transformatoreinheit (26.1) versorgen kann, zumindest einem zweiten, vom ersten Stromabnehmer (32.1) unterschiedlichen Stromabnehmer (32.2), der über einen zweiten, vom ersten Hauptschalter (30.1) unterschiedlichen Hauptschalter (30.2) eine zweite, von der ersten Transformatoreinheit (26.1) unterschiedliche Transformatoreinheit (26.2) versorgen kann, und einer elektrischen Verbindungseinheit (34), durch welche in einem ersten Betriebsmodus ein Energiefluss zwischen dem ersten Stromabnehmer (32.1) und der zweiten Transformatoreinheit (26.2) herstellbar ist und in einem zweiten Betriebsmodus ein Energiefluss zwischen dem zweiten Stromabnehmer (32.2) und der ersten Transformatoreinheit (26.1) herstellbar ist, **dadurch gekennzeichnet, dass**
die elektrische Verbindungseinheit (34) eine Verbindungsleitung (36) sowie eine Schalteinheit (38) aufweist, wobei die Schalteinheit (38) zwei über die elektrische Verbindungsleitung (36) verbundene Schaltvorrichtungen (40.1, 40.2; 40'.1, 40`.2) aufweist, die jeweils einem unterschiedlichen Hauptschalter (30.1, 30.2) zugeordnet sind, wobei jede Schaltvorrichtung (40.1, 40.2; 40'.1, 40`.2) dazu ausgebildet ist, wahlweise einen elektrischen Kontakt der Verbindungsleitung (36) mit der dem zugeordneten Stromabnehmer (32.1, 32.2) zugewandten Seite oder mit der dem zugeordneten Stromabnehmer (32.1, 32.2) abgewandten Seite des zugeordneten Hauptschalters (30.1, 30.2) herzustellen, und
die Schalteinheit (38) dazu ausgebildet ist, in beiden Betriebsmodi die Hauptschalter (30.1, 30.2) in Richtung des Energieflusses in Reihe zu schalten.

2. Schienenfahrzeug nach Anspruch 1,
**gekennzeichnet durch**
eine Steuereinheit (47) zur Steuerung der Hauptschalter (30.1, 30.2), die in zumindest einem Betriebsmodus dazu vorgesehen ist, die Hauptschalter (30.1, 30.2) zeitversetzt voneinander zu schließen.

3. Schienenfahrzeug nach einem der vorhergehenden Ansprüche,
**dadurch gekennzeichnet, dass**
die Transformatoreinheiten (26.1, 26.2) unterschiedlichen Wagen (11, 13) zugeordnet sind.

4. Schienenfahrzeug nach Anspruch 3,
**dadurch gekennzeichnet, dass**
die Hauptschalter (30.1, 30.2) und die jeweils zugeordnete Transformatoreinheit (26.1, 26.2) jeweils dem gleichen Wagen (11, 13) zugeordnet sind.

5. Schienenfahrzeug nach Anspruch 3 oder 4,
**dadurch gekennzeichnet, dass**
die Verbindungsleitung (36) die jeweils eine der Transformatoreinheiten (26.1, 26.2) aufweisenden Wagen (11, 13) verbindet.

6. Schienenfahrzeug nach einem der vorhergehenden Ansprüche,
**dadurch gekennzeichnet, dass**
die Verbindungsleitung (36) als Dachleitung ausgebildet ist.

7. Schienenfahrzeug nach einem der vorhergehenden Ansprüche,
**gekennzeichnet durch**
die Schalteinheit (38) eine Kopplungseinheit (46.2) aufweist, die dazu vorgesehen ist, einen Betätigungsvorgang des zweiten Stromabnehmers (32.2) mit einem Betätigungsvorgang der Schalteinheit (38) zu koppeln.

8. Schienenfahrzeug zumindest nach Anspruch 7,
**dadurch gekennzeichnet, dass**
die Kopplungseinheit (46.2) den zweiten Stromabnehmer (32.2) mit der Schaltvorrichtung (40.2) derart verbindet, dass ein Bringen des zweiten Stromabnehmers (32.2) in den inaktiven Zustand einen elektrischen Kontakt der Verbindungsleitung (36) mit der dem zweiten Stromabnehmer (32.2) zugewandten Seite des zweiten Hauptschalters (30.2) bewirkt.

9. Schienenfahrzeug nach einem der vorhergehenden Ansprüche,
**dadurch gekennzeichnet, dass**
die Schalteinheit (38) einen Schalter (48a.2) aufweist, welcher dazu vorgesehen ist, im ersten Betriebsmodus den zweiten Hauptschalter (30.2) in Reihe mit dem ersten Hauptschalter (30.1) zu schalten und eine elektrische Verbindung des zweiten Hauptschalters (30.2) mit dem zweiten Stromabnehmer (32.2) zu unterbrechen.

## Claims

1. Rail vehicle having a first current collector (32.1), which can power a first transformer unit (26.1) by way of a first main switch (30.1), at least one second current collector (32.2) which differs from the first current collector (32.1) and can power a second transformer unit (26.2) which differs from the first transformer unit (26.1) by way of a second main switch (30.2) which differs from the first main switch (30.1), and an electric connector unit (34), by means of which in a first mode of operation an energy flow can be established between the first current collector (32.1) and the second transformer unit (26.2), and in a second mode of operation an energy flow can be established between the second current collector (32.2) and the first transformer unit (26.1),
**characterised in that**
the electric connector unit (34) has a connecting line (36) and a switching unit (38), wherein the switching unit (38) has two switching apparatuses (40.1, 40.2; 40'.1, 40'.2) connected by way of the electric connecting line (36), which are each assigned to a different main switch (30.1, 30.2), wherein each switching apparatus (40.1, 40.2; 40'.1, 40'2) is embodied to selectively establish an electrical contact of the connecting line (36) with the side of the assigned main switch (30.1, 30.2) facing the assigned current collector (32.1, 32.2) or with the side facing away from the assigned current collector (32.1, 32.2) and
in both modes of operation the switching unit (38) is embodied to connect the main switches (30.1, 30.2) in series in the direction of the energy flow.

2. Rail vehicle according to claim 1,
**characterised by**
a control unit (47) for controlling the main switches (30.1, 30.2), which is provided in at least one mode of operation, to close the main switches (30.1, 30.2) in a time-offset manner in respect of one another.

3. Rail vehicle according to one of the preceding claims,
**characterised in that**
the transformer units (26.1, 26.2) are assigned to different carriages (11, 13).

4. Rail vehicle according to claim 3,
**characterised in that**
the main switches (30.1, 30.2) and the respectively assigned transformer unit (26.1, 26.2) are each assigned to the same carriage (11, 13).

5. Rail vehicle according to claim 3 or 4,
**characterised in that**
the connecting line (36) connects the carriages (11, 13) which each have one of the transformer units (26.1, 26.2).

6. Rail vehicle according to one of the preceding claims,
**characterised in that**
the connecting line (36) is embodied as a roof line.

7. Rail vehicle according to one of the preceding claims,
**characterised by**
the switching unit (38) has a coupling unit (46.2), which is provided to couple an actuation process of the second current collector (32.2) to an actuation process of the switching unit (38).

8. Rail vehicle at least according to claim 7,
**characterised in that**
the coupling unit (46.2) connects the second current collector (32.2) to the switching apparatus (40.2) such that bringing the second current collector (32.2) into the inactive state, gives rise to an electrical contact of the connecting line (36) with the side of the second main switch (30.2) which faces the second current collector (32.2).

9. Rail vehicle according to one of the preceding claims,
**characterised in that**
the switching unit (38) has a switch (48a.2), which is provided, in the first mode of operation, to connect the second main switch (30.2) in series with the first main switch (30.1) and to interrupt an electrical connection between the second main switch (30.2) and the second current collector (32.2).

## Revendications

1. Véhicule ferroviaire comprenant un appareil (32.1) de prise de courant, qui peut alimenter une unité (26.1) de transformateur par l'intermédiaire d'un premier interrupteur (30.1) principal, au moins un deuxième appareil (32.2) de prise de courant, différent du premier appareil (32.1) de prise de courant, qui, par un deuxième interrupteur (30.2) principal, différent du premier interrupteur (30.1) principal, peut alimenter une deuxième unité (26.2) de transformateur, différente de la première unité (26.1) de transformateur, et une unité (34) de liaison électrique, par laquelle, dans un premier mode de fonctionnement, un flux d'énergie, entre le premier appareil (32.1) de prise de courant et la deuxième unité (26.2) de transformateur, peut être produit et, dans un deuxième mode de fonctionnement, un flux d'énergie, entre le deuxième appareil (32.2) de prise de courant et la première unité (26.1) de transformateur, peut être produit,
**caractérisé en ce que**
l'unité (34) de liaison électrique a une ligne (36) de liaison ainsi qu'une unité (38) de commutation, l'unité (38) de commutation ayant deux dispositifs (40.1, 40.2 ; 40'.1, 40'.2) de commutation, qui sont reliés par la ligne (36) de liaison électrique et qui sont associés respectivement à un interrupteur (30.1, 30.2) principal différent, chaque dispositif (40.1, 40.2 ; 40'.1, 40'.2) de commutation étant constitué pour produire au choix un contact électrique de la ligne (36) de liaison avec le côté tourné vers l'appareil (32.1, 32.2) de prise de courant associé ou avec le côté éloigné de l'appareil (32.1, 32.2) de prise de courant associé de l'interrupteur (30.1, 30.2) principal associé et
l'unité (38) de commutation est constituée pour, dans les deux modes de fonctionnement, mettre en série les interrupteurs (30.1, 30.2) principaux dans la direction du flux d'énergie.

2. Véhicule ferroviaire suivant la revendication 1,
**caractérisé par**
une unité (47) de commande pour commander les interrupteurs (30.1, 30.2) principaux, qui, dans au moins un mode de fonctionnement, est prévue pour fermer, d'une manière décalée l'un par rapport à l'autre dans le temps, les interrupteurs (30.1, 30.2) principaux.

3. Véhicule ferroviaire suivant l'une des revendications précédentes,
**caractérisé en ce que**
les unités (26.1, 26.2) de transformateur sont associées à des voitures (11, 13) différentes.

4. Véhicule ferroviaire suivant la revendication 3,
**caractérisé en ce que**
les interrupteurs (30.1, 30.2) principaux et l'unité (26.1, 26.2) de transformateur associée sont associés respectivement à la même voiture (11, 13).

5. Véhicule ferroviaire suivant la revendication 3 ou 4,
**caractérisé en ce que**
la ligne (36) de liaison relie les voitures (11, 13) ayant respectivement l'une des unités (26.1, 26.2) de transformateur.

6. Véhicule ferroviaire suivant l'une des revendications précédentes,
**caractérisé en ce que**
la ligne (36) de liaison est constituée en ligne de toit.

7. Véhicule ferroviaire suivant l'une des revendications précédentes,
**caractérisé en ce que**
l'unité (38) de commutation a une unité (46.2) de couplage prévue pour coupler une opération d'actionnement du deuxième appareil (32.1) de prise de courant à une opération d'actionnement de l'unité (38) de commutation.

8. Véhicule ferroviaire au moins suivant la revendication 7,
**caractérisé en ce que**
l'unité (46.2) de couplage du deuxième appareil (32.2) de prise de courant est reliée au dispositif (40.2) de commutation, de manière à ce que la mise du deuxième appareil (32.2) de prise de courant dans l'état inactif provoque un contact électrique de la ligne (36) de liaison avec le côté, tourné vers le deuxième appareil (32.2) de prise de courant, du deuxième interrupteur (30.2) principal.

9. Véhicule ferroviaire suivant l'une des revendications précédentes,
**caractérisé en ce que**
l'unité (38) de commutation a un interrupteur (48a.2) prévu pour mettre, dans le premier mode de fonctionnement, le deuxième interrupteur (30.2) principal en série avec le premier interrupteur (30.1) principal et interrompre une liaison électrique du deuxième interrupteur (30.2) principal avec le deuxième appareil (32.2) de prise de courant.
